(19) Europäisches Patentamt
European Patent Office
Office européen des brevets

(11) **EP 3 361 694 A1**

(12) **EUROPEAN PATENT APPLICATION**
published in accordance with Art. 153(4) EPC

(43) Date of publication:
**15.08.2018 Bulletin 2018/33**

(51) Int Cl.:
***H04L 29/06*** *(2006.01)*

(21) Application number: **16901226.7**

(22) Date of filing: **10.05.2016**

(86) International application number:
**PCT/CN2016/081503**

(87) International publication number:
**WO 2017/193271 (16.11.2017 Gazette 2017/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **FU, Tianfu**
  **Shenzhen**
  **Guangdong 518129 (CN)**
• **ZHOU, Chong**
  **Shenzhen**
  **Guangdong 518129 (CN)**
• **LIU, Ziyi**
  **Shenzhen**
  **Guangdong 518129 (CN)**

(74) Representative: **Epping - Hermann - Fischer**
**Patentanwaltsgesellschaft mbH**
**Schloßschmidstraße 5**
**80639 München (DE)**

(54) **METHOD AND DEVICE FOR DETECTING NETWORK ATTACK**

(57)    Embodiments of this application relate to the field of network security technologies, and provide a method and a device for detecting a network attack. The method includes: collecting characteristic information of each of N sessions in a network, where N is an integer greater than 1; obtaining a statistical result, where the statistical result is a result obtained by collecting statistics on the characteristic information of the N sessions by using each of the N sessions as a sampling unit and by using the characteristic information as a sample value; and if a difference between the statistical result and a reference result exceeds a preset condition, determining that the network is under a network attack. According to this application, the following technical problem is resolved: because it is difficult to collect, by using a packet random sampling technology, sufficient network attack packets that occupy a relatively small proportion in data traffic, it is difficult to detect this type of network attack. In the embodiments of this application, a session-type network attack can be effectively detected because instead of a packet, a session is used as a sampling unit.

S301

Collect characteristic information of each of N sessions in a network, where N is an integer greater than 1

S302

Obtain a statistical result, where the statistical result is a result obtained by collecting statistics on the characteristic information of the N sessions by using each of the N sessions as a sampling unit and by using the characteristic information as a sample value

S303

If a difference between the statistical result and a reference result exceeds a preset condition, determine that the network is under a network attack

FIG. 3

**Description**

**TECHNICAL FIELD**

Embodiments of this application relate to the field of network security technologies, and in particular, to a method and a device for detecting a network attack.

**BACKGROUND**

A network attack is an important security problem in a network. For example, a denial of service (English: denial of service, DoS for short) attack is a common network attack. The DoS attack is sending an attack packet to a target device of a network attack and occupying a resource of the target device or the network. Consequently, the target device or the network cannot run normally.

Usually, a device in a network implements network attack detection by using a packet random sampling technology. A method for implementing network attack detection by means of packet random sampling is: collecting a proportion of packets in data traffic received by a network device in a target time period, obtaining characteristic information of each packet, and performing statistical analysis on characteristics of the packets, to determine whether a network in which the network device is located is under a network attack in the target time period.

However, there are some network attacks whose attack packets occupy a relatively small proportion in overall data traffic of a network, but consume many resources of a target device. It is difficult to collect sufficient network attack packets of this type by means of packet random sampling. Therefore, it is difficult to detect this type of network attack by performing statistical analysis on characteristics obtained by means of packet random sampling.

**SUMMARY**

Embodiments of this application provide a method and a device for detecting a network attack, to detect a network attack that is difficult to be detected by using a packet random sampling technology.

According to a first aspect, an embodiment of the present invention provides a method for detecting a network attack, where the method includes: collecting characteristic information of each of N sessions in a network, where N is an integer greater than 1; obtaining a statistical result, where the statistical result is a result obtained by collecting statistics on the characteristic information of the N sessions by using each of the N sessions as a sampling unit and by using the characteristic information as a sample value; and if a difference between the statistical result and a reference result exceeds a preset condition, determining that the network is under a network attack.

Statistical analysis is performed on characteristic information of a session by means of random session sampling by using a session as a unit. In this way, a session-type network attack that is difficult to be detected by means of conventional packet random sampling can be effectively detected. The session-type network attack has the following characteristics: A device initiating a network attack occupies a resource of a target device by initiating many sessions. A session is initiated only by using few packets, but occupies many resources of a device. Therefore, the target device may be relatively greatly damaged even if there are a few network attack packets. If a packet is used as a sampling unit, because a network attack packet satisfying the foregoing characteristic of the session-type network attack occupies a very small proportion in data traffic, it is difficult to collect this type of network attack packet. In this application, a session is used as a sampling unit. Both a network attack packet that has only one session establishment request and a normal session that includes relatively large data traffic are used as a session in sampling statistics collection. Therefore, there is a relatively large probability of identifying the session-type network attack.

In a first possible implementation manner of the first aspect, the characteristic information is a value representing a size, and the statistical result is a Gini coefficient; and the obtaining a statistical result includes: sorting the N sessions in ascending order according to the characteristic information; selecting M sessions from the N sessions, and obtaining M coordinates in a coordinate system, where the M coordinates are in one-to-one correspondence with the M sessions, $a^{th}$ coordinates in the M sessions correspond to the $b^{th}$ session in the sorted N sessions, the $a^{th}$ coordinates are (b/N, w/W), w is a sum of characteristic information of b sessions that have the smallest characteristic information in the N sessions, W is a sum of the characteristic information of the N sessions, M is an integer greater than 1 and less than or equal to N, a is an integer greater than or equal to 1 and less than or equal to M, and b is an integer greater than or equal to 1 and less than or equal to N; obtaining a Lorenz curve in the coordinate system according to the M coordinates; and calculating the Gini coefficient according to the Lorenz curve.

In a second possible implementation manner of the first aspect, the statistical result is an information entropy, and the obtaining a statistical result includes: calculating an occurrence probability of each type of session in n types of sessions in the N sessions according to the characteristic information of each of the N sessions, where each of the N sessions belongs to one type of session in the n types of sessions, and n is an integer greater than or equal to 1 and less than or equal to N; and calculating the information entropy according to the occurrence probability of each type of session in the n types of sessions.

In a third possible implementation manner of the first aspect, the statistical result is a convolution, and the characteristic information of each of the N sessions includes a first type of characteristic information and a second type of characteristic information, where the first type of characteristic information is a value representing a size, and the second type of characteristic information is a value representing a size; and the obtaining a statistical result includes: constructing a first discrete sequence according to the first type of characteristic information of each of the N sessions; constructing a second discrete sequence according to the second type of characteristic information of each of the N sessions; and calculating the convolution of the first discrete sequence and the second discrete sequence.

In a fourth possible implementation manner of the first aspect, the statistical result is a vector sum, and the characteristic information of each of the N sessions includes p types of characteristic information, where p is an integer greater than 1; and the obtaining a statistical result includes: constructing N vectors, where the N vectors are in one-to-one correspondence with the N sessions, each of the N vectors has p dimensions, and the p dimensions are in one-to-one correspondence with the p types of characteristic information; and calculating the vector sum of the N vectors.

In a fifth possible implementation manner of the first aspect, the statistical result is a vector product, and the characteristic information of each of the N sessions includes p types of characteristic information, where p is an integer greater than 1; and the obtaining a statistical result includes: constructing N vectors, where the N vectors are in one-to-one correspondence with the N sessions, each of the N vectors has p dimensions, and the p dimensions are in one-to-one correspondence with the p types of characteristic information; and calculating the vector product of the N vectors.

This embodiment of this application provides multiple statistics collection methods, so that this solution is more flexible and has better applicability.

With reference to the first aspect or any one of the possible implementation manners of the first aspect, in a sixth possible implementation manner of the first aspect, the characteristic information includes one or more of 5-tuple information, packet quantity information, byte quantity information, time information, information about a time to live (English: Time To Live, TTL for short), packet length information, geographic information, or an average packet length.

Collecting multiple types of characteristic information in the foregoing manner helps detect a network attack from multiple different dimensions, and helps improve precision of network attack detection.

With reference to the first aspect or any one of the possible implementation manners of the first aspect, in a seventh possible implementation manner of the first aspect, after the determining that the network is under a network attack, the method further includes: determining a source of the network attack according to the statistical result; or determining a target of the network attack according to the statistical result.

A source or a target of a network attack is further determined in the foregoing manner. An initiator of a network attack is accurately located, thereby effectively stopping the network attack in time. In addition, a victim under the network attack is accurately located, so that the victim can use an effective strategy to respond to the network attack in time.

According to a second aspect, an embodiment of the present invention provides a device for detecting a network attack, where the device includes at least one unit, and the at least one unit is configured to implement the method provided in any one of the first aspect or the possible implementation manners of the first aspect.

According to a third aspect, an embodiment of the present invention provides a device for detecting a network attack, where the device for detecting a network attack may implement the method provided in any one of the first aspect or the possible implementation manners of the first aspect. In a possible design, the device includes a processor and a network interface. The processor is configured to perform the following operations: collecting characteristic information of each of N sessions in a network by using the network interface, where N is an integer greater than 1; obtaining a statistical result, where the statistical result is a result obtained by collecting statistics on the characteristic information of the N sessions by using each of the N sessions as a sampling unit and by using the characteristic information as a sample value; and if a difference between the statistical result and a reference result exceeds a preset condition, determining that the network is under a network attack.

**BRIEF DESCRIPTION OF DRAWINGS**

To describe the technical solutions in the embodiments of the present application more clearly, the following briefly introduces the accompanying drawings required for describing the embodiments. Apparently, the accompanying drawings in the following description show merely some embodiments of the present application, and a person of ordinary skill in the art may still derive other drawings from these accompanying drawings without creative efforts.

FIG. 1 is a schematic diagram of an implementation environment according to an embodiment of this application;
FIG. 2 is a block diagram of a device for detecting a network attack according to an embodiment of this application;
FIG. 3 is a flowchart of a method for detecting a network attack according to an embodiment of this application;
FIG. 4A is a flowchart of a method for detecting a network attack according to another embodiment of this application;

FIG. 4B is a schematic diagram of a Lorenz curve according to another embodiment of this application;
FIG. 5 is a flowchart of a method for detecting a network attack according to another embodiment of this application;
FIG. 6 is a flowchart of a method for detecting a network attack according to another embodiment of this application;
FIG. 7 is a flowchart of a method for detecting a network attack according to another embodiment of this application;
FIG. 8 is a flowchart of a method for detecting a network attack according to another embodiment of this application; and
FIG. 9 is a block diagram of a device for detecting a network attack according to another embodiment of this application.

## DESCRIPTION OF EMBODIMENTS

To make the objectives, technical solutions, and advantages of the present application clearer, the following further describes the implementation manners of the present application in detail with reference to the accompanying drawings.

A "module" mentioned in this specification may be implemented by hardware, or may be implemented by a combination of software and hardware, or may be implemented by a program or an instruction that is stored in a memory and that can implement some functions. A "unit" mentioned in this specification refers to a functional structure divided according to logic. The "unit" may be implemented by pure hardware or may be implemented by a combination of software and hardware.

The term "several" mentioned in this specification refers to one or more, and the term "multiple" refers to two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

Before the embodiments of this application are described, a session involved in the embodiments of this application is first described.

In this application, a session (English: session) refers to communication interaction between two devices in a particular uninterrupted operation period. During a session, all packets transmitted between two devices belong to the session.

In an example of the "session", when a packet for communication between a first device and a second device is a Transmission Control Protocol (English: Transmission Control Protocol, TCP for short) packet, or a packet for communication between a first device and a second device is a User Datagram Protocol (English: User Datagram Protocol, UDP for short) packet, the TCP packet or the UDP packet carries 5-tuple information. 5-tuple information of multiple packets of a same session matches. That is, in 5-tuple information carried in a packet sent by the first device to the second device, a source IP address is an IP address of the first device, a source port number is a port number of the first device, a destination IP address is an IP address of the second device, and a destination port number is a port number of the second device. In 5-tuple information carried in a packet sent by the second device to the first device, a source IP address is the IP address of the second device, a source port number is the port number of the second device, a destination IP address is the IP address of the first device, and a destination port number is the port number of the first device. Transport layer protocol types used by the packets sent between the two devices are all the same. These packets belong to a same TCP/UDP session.

In another example of the "session", when a packet for communication between a first device and a second device is neither a TCP packet nor a UDP packet, for example, when the packet for communication between the first device and the second device is an Internet Control Message Protocol (English: Internet Control Message Protocol, ICMP for short) packet, it may also be considered that multiple packets whose 2-tuple information matches are packets of a same session. That is, in 2-tuple information carried in a packet sent by the first device to the second device, a source IP address is an IP address of the first device, and a destination IP address is an IP address of the second device. In 2-tuple information carried in a packet sent by the second device to the first device, a source IP address is the IP address of the second device, and the destination IP address is the IP address of the first device. Transport layer protocol types used by the packets sent between the two devices are all the same. These packets belong to a same ICMP session.

In this application, whether a connection needs to be established between two devices of a session is not limited. A session may have an explicit connection establishment process and an explicit connection break process. For example, in a TCP session (English: TCP session) process, a TCP connection is established between two ports of two devices by means of a three-way handshake (English: three-way handshake), and the TCP connection is broken by means of a four-way handshake (English: four-way handshake) when the session is completed. Alternatively, a session may have no connection establishment process. For example, two ports of two devices communicate with each other in a continuous time period by using the UDP.

For a session having an explicit connection establishment process and an explicit connection break process, a first packet in the connection establishment process may be used as a start of the session, and a last packet in the connection break process is used as an end of the session. For example, a first handshake packet in the three-way handshake of the TCP session is used as a start of the session, and a fourth handshake packet in the four-way handshake of the TCP session is used as an end of the session. For a session having no connection establishment process, if no packet is transmitted between two devices in first preset duration before a packet is transmitted between the two devices, it is considered that the packet is a first packet of the session. After a packet is transmitted between the two devices, if a next packet is transmitted in second preset duration, the next packet and the previously transmitted packet belong to one session. If no next packet is transmitted in the second preset duration, it is considered that the session ends.

Certainly, a person skilled in the art may understand that if a packet is a network attack packet, even if a protocol used by the packet has an explicit connection establishment process and an explicit connection break process, for example, the TCP, a session may still not have a complete establishment process and a complete ending process. For example, a device initiating a network attack does not send any packet after performing a three-way handshake, or a device initiating a network attack does not perform subsequent answering after initiating the first handshake, or a device initiating a network attack sends a malformed packet whose flag field does not conform to a protocol definition. In this case, the start and the end of a session may be determined by using a method the same as the foregoing method for determining the start and the end of the session that does not have the connection establishment process, or a condition for determining the start and the end of a session is set for a common type of a network attack packet.

In the embodiments of this application, packets of several sessions in a network are collected according to a preset sampling rule by using a random session sampling technology, characteristic information of each session is extracted from the collected packets, and statistical analysis is performed on characteristic information of the sessions by using a session as a unit, to perform network attack detection. It should be noted that for each session, when characteristic information of the session is extracted, a quantity of packets that need to be collected depends on to-be-extracted characteristic information of the session. For example, when to-be-extracted characteristic information of each session is 5-tuple information, only one packet of the session needs to be collected. For another example, when to-be-extracted characteristic information of a session is packet quantity information, all packets of the session need to be collected.

Technical solutions provided in this application are described in detail below by using some embodiments.

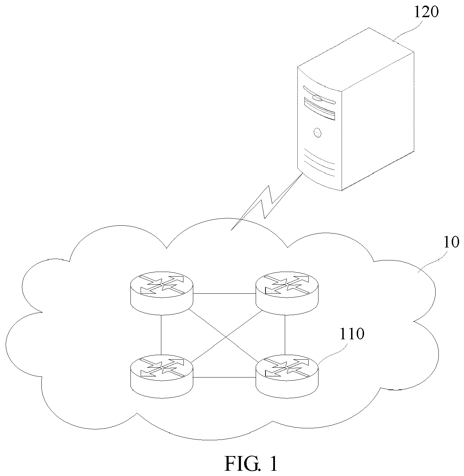

Referring to FIG. 1, FIG. 1 is a schematic diagram of an implementation environment according to an embodiment of this application. The implementation environment may be a network system in which communication is performed based on the TCP/IP. For example, as shown in FIG. 1, the implementation environment includes: a network 10 including several network devices 110, and a device 120 for detecting a network attack ("detection device" for short below).

For example, the network 10 may be a carrier network, or may be a local area network. The network device 110 may be a switch, a router, a wavelength division multiplexing device, a packet transport network device, an optical transport network device, a firewall, a data center, or the like. In this embodiment, networking structures of the several network devices 110 in the network 10 are not limited. For example, the networking structure may be a centralized networking structure or a distributed networking structure.

In a process of forwarding a packet, the network device 110 performs session sampling according to a preset sampling rule. That is, the network device 110 samples packets in several sessions, and obtains characteristic information of each of the several sessions.

For example, when the network device 110 extracts packets in several sessions, in a preset time period, each time the network device 110 receives a packet, the network device 110 mirrors the packet, stores the mirrored packet to obtain characteristic information of a session to which the packet belongs, and forwards the original packet according to a transmission path. In this application, collecting characteristic information of a session from a packet refers to collecting the characteristic information of the session from a mirrored and stored packet unless otherwise described.

For example, the network device 110 may determine a session to which a packet belongs by using the following method. The network device 110 obtains 5-tuple information in the packet and uses the 5-tuple information as first 5-tuple information. The network device 110 determines whether the first 5-tuple information is stored in a session information table. If the first 5-tuple information is stored in the session information table, it indicates that the packet and a packet previously received by the network device 110 belong to a same session, and the network device 110 identifies the session to which the packet belongs. If the first 5-tuple information is not stored in the session information table, a source IP address and a destination IP address in the first 5-tuple information are interchanged, and a source port address and a destination port address in the first 5-tuple information are interchanged, to obtain second 5-tuple information. It is determined whether the second 5-tuple information is stored in the session information table. If the second 5-tuple information is stored in the session information table, it also indicates that the packet and a packet previously received by the network device 110 belong to a same session, and the network device 110 identifies the session to which the packet belongs. If the session information table includes neither the first 5-tuple information nor the second 5-tuple information, it indicates that the network device 110 has not received any packet that belongs to the session, and the network device 110 adds the first 5-tuple information or the second 5-tuple information to the session information table. Certainly, the first 5-tuple information and the second 5-tuple information may be respectively a first hash value and a second hash value that are obtained through calculation by using a same harsh function according to the first 5-tuple information and the second 5-tuple information. According to the foregoing steps, the network device 110 collects packets received in a preset time period, and identifies a session to which each packet belongs.

The session sampling rule on the network device 110 may be configured by a network manager on the network device 110, or may be sent by the detection device 120. For example, the sampling rule may be sampling a preset proportion of sessions in a preset time period. After sampling the sessions, the network device 110 extracts characteristic information of each of the sampled sessions, and sends the characteristic information to the detection device 120.

The detection device 120 establishes a communication connection to several network devices 110 in the network 10. Specifically, the detection device 120 establishes a communication connection to the network device 110 configured to perform session sampling in the network 10. The network device 110 configured to perform session sampling may be one or more network devices 110 in the network 10. The detection device 120 receives the characteristic information of the session that is sent by the network device 110. The detection device 120 is configured to perform statistical analysis on the characteristic information of the session, and detect whether the network 10 is under a network attack.

In an implementation manner, the detection device 120 may be a standalone server. Certainly, in another possible implementation manner, the detection device 120 may be implemented by a software or hardware module of a network device 110 in the network 10. The detection device 200 may also be a cluster including multiple network devices.

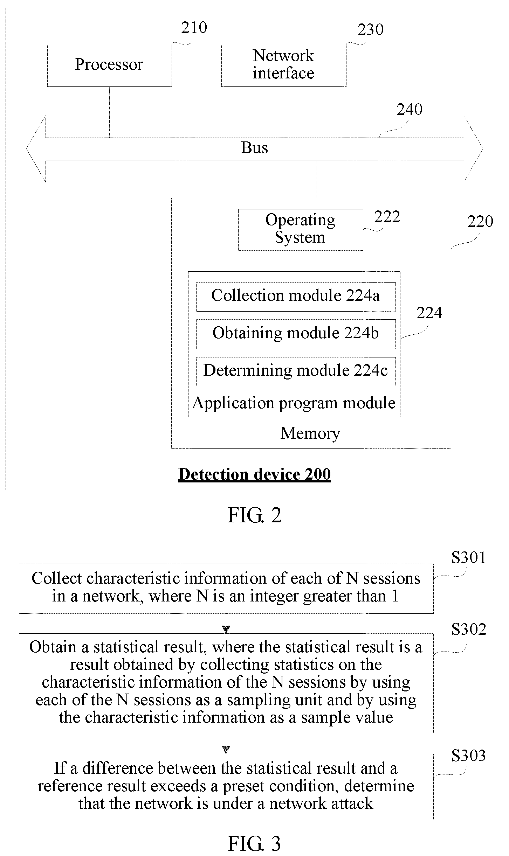

Referring to FIG. 2, FIG. 2 is a block diagram of a device 200 for detecting a network attack ("detection device" for short below) according to an embodiment of this application. The detection device 200 may include: a processor 210, a memory 220, a network interface 230, and a bus 240. The memory 220 and the network interface 230 are connected to the processor 210 by using the bus 240. The detection device 200 is configured to detect whether the network is under a network attack. With reference to the implementation environment shown in FIG. 1, the detection device 200 may be the detection device 120 shown in FIG. 1. The detection device 200 may be a standalone server, or may be a software or hardware module on a network device in the network; or the detection device 200 may be a cluster including multiple network devices.

The processor 210 includes one or more processing cores. The processor 210 runs a software program and module to implement various function applications and data processing. The processor 210 includes an operation logic component, a register component, a control component, and the like. The processor 210 may be a standalone central processing unit, or may be an embedded processor, for example, a micro processor unit (English: Micro Processor Unit, MPU for short), a microcontroller unit (English: Microcontroller Unit, MCU for short), or a digital signal processor (English: Embedded Digital Signal Processor, EDSP for short).

The memory 220 may be implemented by any type of volatile or non-volatile storage device or a combination thereof, for example, a static random access memory (English: Static Random Access Memory, SRAM for short), an electrically erasable programmable read-only memory (English: Electrically Erasable Programmable Read-Only Memory, EEPROM for short), an erasable programmable read only memory (English: Erasable Programmable Read Only Memory, EPROM for short), a programmable read-only memory (English: Programmable Read-Only Memory, PROM for short), a read-only memory (English: Read Only Memory, ROM for short), a magnetic memory, a flash memory, a magnetic disk, or an optical disc. The memory 220 may be configured to store an executable instruction such as a software program or module.

The network interface 230 may be a wired interface, for example, a fiber distributed data interface (English: Fiber Distributed Data Interface, FDDI for short), or an Ethernet (English: Ethernet) interface. The network interface 230 may be a wireless interface, for example, a wireless local area network interface.

The processor 210 is configured to execute the instruction stored in the memory 220. The processor 210 executes the instruction to implement the following method: collecting characteristic information of each of N sessions in a network, where N is an integer greater than 1; obtaining a statistical result, where the statistical result is a result obtained by collecting statistics on the characteristic information of the N sessions by using each of the N sessions as a sampling unit and by using the characteristic information as a sample value; and if a difference between the statistical result and a reference result exceeds a preset condition, determining that the network is under a network attack.

The network interface 230 is used for external communication. The network interface 230 may include multiple types of interfaces. For example, the network interface 230 is configured to send an instruction for performing random session sampling to a network device in the network, and receive characteristic information of the session from the network device, and the like.

Optionally, the memory 220 may store an operating system 222 and an application program module 224 that is needed by at least one function. The operating system 222 may be an operating system such as a real-time operating system (English: Real Time Executive, RTX for short), LINUX, UNIX, WINDOWS, or OS X. The application program module 224 may include: a collection module 224a, an obtaining module 224b, and a determining module 224c. The collection module 224a is configured to collect characteristic information of each of N sessions in a network, and N is an integer greater than 1. The obtaining module 224b is configured to obtain a statistical result. The statistical result is a result obtained by collecting statistics on the characteristic information of the N sessions by using each of the N sessions as a sampling unit and by using the characteristic information as a sample value. The determining module 224c is configured to: if a difference between the statistical result and a reference result exceeds a preset condition, determine that the network is under a network attack.

Optionally, the detection device 200 may further include an input/output component (not shown in the figure). The input/output component includes: a display configured to display information, and an input device for a user to enter information, such as a mouse or a keyboard. The display and the input device communicate with the processor 210.

Referring to FIG. 3, FIG. 3 is a flowchart of a method for detecting a network attack according to an embodiment of this application. For example, the method may be applied to the implementation environment shown in FIG. 1. Steps in FIG. 3 may be executed by the detection device 120 or the detection device 200 shown in FIG. 2. The method may include the following steps.

S301: Collect characteristic information of each of N sessions in a network, where N is an integer greater than 1.

Specifically, a session in a network means that a packet that belongs to the session is transmitted in a device in the network. Two devices involved in the session may be devices in the network; or only one of two devices is a device in the network; or neither of two devices involved in the session is a device in the network. The packet of the session is forwarded in a forwarding device of the network.

For example, the characteristic information of the session may include characteristic information directly collected from a packet included in the session, or may include characteristic information obtained after processing is performed on the directly collected characteristic information. For the characteristic information obtained after the processing, the processing step may be performed by a network device performing session sampling, or may be performed by a detection device.

The network device may be the network device 110 in the network in the implementation environment shown in FIG. 1. For example, after receiving the instruction that is delivered by the detection device 120 to perform random session sampling, the network device 110 collects packets of several sessions in the network according to a preset sampling rule, extracts characteristic information of the sessions, and sends the characteristic information to the detection device 120.

For example, the characteristic information of the sessions may include one or more pieces of information used to describe characteristics of the sessions.

For example, characteristic information of a session includes, but is not limited to, one or more of 5-tuple information, packet quantity information of the session, byte quantity information, time information, TTL information, packet length information, geographic information, or an average packet length. The 5-tuple information includes: a destination IP address, a source IP address, a destination port number, a source port number, and a protocol type. The packet quantity information includes, but is not limited to, one or more of an uplink packet quantity, a downlink packet quantity, an uplink fragment (English: fragment) packet quantity, or a downlink fragment packet quantity. The byte quantity information includes, but is not limited to, one or more of an uplink byte quantity or a downlink byte quantity. The time information includes, but is not limited to, one or more of an interval between uplink packets, an interval between downlink packets, or session duration. The TTL information includes, but is not limited to, one or more of an uplink maximum TTL, a downlink maximum TTL, an uplink minimum TTL, or a downlink minimum TTL. The packet length information includes, but is not limited to, one or more of an uplink maximum packet length, a downlink maximum packet length, an uplink minimum packet length, or a downlink minimum packet length. The geographic information includes one or more of source geographic information or destination geographic information. The geographic information may be obtained by converting an IP address. A home location of a source IP address is the source geographic information, and a home location of a destination IP address is the destination geographic information. The geographic information may also be obtained through query from a geographic information system (English: Geographic Information System, GIS for short) according to the IP address. The average packet length may include one or more of an average uplink packet length or an average downlink packet length. The average packet length may be obtained by dividing a total byte quantity obtained through sampling by a total packet quantity obtained through sampling.

For example, in an example in which the session is a TCP session, the characteristic information of the session includes, but is not limited to, one or more of 5-tuple information, packet quantity information of the session, byte quantity information, time information, TTL information, packet length information, geographic information, an average packet length, a health status of the TCP session, or a statistical result of out-of-order packets. The packet quantity information may include one or more of an uplink packet quantity, a downlink packet quantity, an uplink fragment packet quantity, a downlink fragment packet quantity, a synchronization (English: synchronize, syn for short) packet quantity of the TCP session, a finish (English: finish, fin for short) packet quantity of the TCP session, an acknowledge (English: acknowledge, ack for short) packet quantity of the TCP session, a reset (English: reset, rst for short) packet quantity of the TCP session, an urgent (English: urgent, urg for short) packet quantity of the TCP session, or a push (English: push, psh for short) packet quantity of the TCP session. The time information may include one or more of an interval between uplink packets, an interval between downlink packets, session duration, a server response time of the TCP session, or a client response time of the TCP session. The health status of the TCP session includes information related to quality of service (English:

Quality of Service, QoS for short) performance of the TCP session, for example, one or more of whether a TCP connection is successfully established, a quantity of lost packets, or a delay. The statistical result of out-of-order packets refers to a statistical result of a case in which a packet sent later arrives at a target device earlier than a previously sent packet in a session.

It should be noted that for a device performing a session, an uplink packet refers to a packet sent to the device, and a downlink packet refers to a packet sent from the device. For the network device 110 obtaining characteristic information of the session, uplink and downlink may be defined by the network device 110. For example, a first device has a session with a second device. The uplink packet may be sent by the first device to the second device, and the downlink packet may be sent by the second device to the first device. Certainly, alternatively, the uplink packet may be sent by the second device to the first device, and the downlink packet may be sent by the first device to the second device.

It should be noted that packets in a session are bidirectional, for example, include the uplink packet and the downlink packet. Therefore, in the characteristic information of the session in this application, 5-tuple information, a source address, a destination address, source geographic information, or destination geographic information refers to 5-tuple information, a source address, a destination address, source geographic information, or destination geographic information of a packet of bidirectional packets that is transmitted in one direction in the session.

S302: Obtain a statistical result, where the statistical result is a result obtained by collecting statistics on the characteristic information of the N sessions by using each of the N sessions as a sampling unit (English: sampling unit) and by using the characteristic information as a sample (English: sample) value.

Specifically, the statistical result is a result obtained by collecting statistics on a sample value of each sampling unit according to a particular statistics collection method. Specifically, using each session as a sampling unit means that a session is a smallest statistical unit, and using the characteristic information as a sample value means that each piece of characteristic information is characteristic information of a session. The statistical result reflects a related feature of the characteristic information.

For example, when the characteristic information is an average packet length, the statistical result is used to reflect a distribution characteristic of average packet lengths of sessions, for example, whether the average packet lengths of the sessions are similar. For another example, when the characteristic information is destination geographic information, the statistical result is used to reflect a distribution characteristic of destination geographic information of sessions, for example, geographic location distribution indicated by the destination geographic information of the sessions. For example, the statistical result may be any one of a Gini coefficient (English: Gini coefficient), an information entropy, a convolution, a vector sum, or a vector product. The statistical results listed above and the statistics collection method for obtaining the foregoing statistical results are separately described in detail below.

Certainly, a person skilled in the art may understand that the statistical result may be a result obtained by collecting statistics on one type of characteristic information of each session, or may be a result obtained by collecting statistics on multiple types of characteristic information of each session. For example, in the following example in which the statistical result is a Gini coefficient and the characteristic information is an average packet length of a session, the Gini coefficient is a result obtained by collecting statistics based on one type of characteristic information, that is, an average packet length of a session. For another example, in the following example in which the statistical result is a vector sum, a first type of characteristic information is an uplink packet quantity of a session, and a second type of characteristic information is a downlink packet quantity of the session, the vector sum is a result obtained by collecting statistics based on two types of characteristic information, that is, the uplink packet quantity and the downlink packet quantity of the session.

S303: If a difference between the statistical result and a reference result exceeds a preset condition, determine that the network is under a network attack.

For example, if the difference between the statistical result and the reference result exceeds the preset condition, a detection device determines that the network is under a network attack. A type of the statistical result and a type of the reference result are the same.

In an example, if both the statistical result and the reference result are values representing sizes, the preset condition may be a preset value. In another example, if the statistical result and the reference result are not values representing sizes, the preset condition may be another condition reflecting a difference between the two results. For example, if the statistical result and the reference result are respectively multi-dimensional vectors, the preset condition is: A difference between a vector length of the statistical result and a vector length of the reference result does not exceed a first preset value, and a difference between a vector angle of the statistical result and a vector angle of the reference result does not exceed a second preset value.

The reference result is a statistical result of characteristic information of a session when the network is not under a network attack. Optionally, the reference result is obtained in the following manners: in multiple different times, obtaining multiple statistical results by using S301 and S302; and if a difference between the multiple statistical results falls within a particular range, using an average value of the statistical results as the reference result.

Optionally, when it is determined that the network is under a network attack, the detection device further determines a source of the network attack according to the statistical result, or determines a target of the network attack according to the statistical result. For example, the source of the network attack may include one or more of an IP address of a device initiating the network attack, a port number of the device initiating the network attack, or a geographic location of the device initiating the network attack. The target of the network attack may include one or more of an IP address of a device under the network attack, a port number of the device under the network attack, or a geographic location of the device under the network attack.

For example, sessions that mainly affect the difference between the statistical result and the reference result are obtained, and information about devices involved in the sessions is analyzed to determine the source or the target of the network attack. For example, in the following example in which the statistical result is a Gini coefficient, assuming that characteristic information of a session is an average packet length, and packet lengths in a type of network attack are the same, for example, are a first length, the average packet length of the session of the network attack is also approximately equal to the first length. That is, a difference between the average packet length of the session of this type of network attack and the first length is less than a preset value. Many sessions of this type of network attack cause more even distribution of average packet lengths of the sessions in comparison with a normal case. Therefore, the Gini coefficient of the statistical result is obviously less than the Gini coefficient of the reference result. The detection device obtains sessions in which a difference between the average packet length and the first length is less than the preset value, and analyzes geographic information of devices involved in the sessions. Assuming that the detection device determines that it is highly probable that IP addresses of initiators of sessions are in a first subnet segment, for example, a quantity of sessions in which IP addresses of initiators are in the first subnet segment occupies 80% of a total quantity of sessions, the detection device may determine that a device initiating the network attack is a device in the first IP subnet segment.

In conclusion, in the method provided in this embodiment, characteristic information of each of multiple sessions in a network is collected to obtain a statistical result, and when a difference between the statistical result and a reference result exceeds a preset condition, it is determined that the network is under a network attack. Statistical analysis is performed on characteristic information of a session by means of random session sampling by using a session as a unit. In this way, a session-type network attack that is difficult to be detected by means of conventional packet random sampling can be effectively detected. The session-type network attack has the following characteristics: A device initiating a network attack occupies a resource of a target device by initiating many sessions. A session is initiated only by using few packets, but occupies many resources of a device. Therefore, the target device may be relatively greatly damaged even if there are a few network attack packets. If a packet is used as a sampling unit, because a network attack packet satisfying the foregoing characteristic of a session-type network attack occupies a very small proportion in data traffic, it is difficult to collect this type of network attack packet. In this application, a session is used as a sampling unit. Both a network attack packet that has only one session establishment request and a normal session that includes relatively large data traffic are used as a session in sampling statistics collection. Therefore, there is a relatively large probability of identifying the session-type network attack.

In addition, a random session sampling technology can well restore a characteristic of a session, for example, an IP address distribution characteristic and a location distribution characteristic of the session, thereby achieving a technical effect of effectively detecting abnormal IP distribution and abnormal location distribution.

Referring to the following Table-1, Table-1 shows examples of some statistics collection methods and characteristic information applicable to each statistics collection method ("V" represents "applicable").

**Table-1**

| Category | Attribute | Gini coefficient | Information entropy | Convolution | Vector sum | Vector product |
|---|---|---|---|---|---|---|
| Basic information (that is, 5-tuple information) | Destination IP address (DstIP) | | √ | | | |
| | source IP address (SrcIP) | | √ | | | |
| | Destination port number (DstPort) | | √ | | | |
| | Source port number (SrcPort) | | √ | | | |
| | Protocol type (Protocol) | | | | | |
| Geographic information | Destination geographic information | | √ | | √ | |
| | Source geographic information | | √ | | √ | |
| Packet quantity information | Uplink and downlink packet quantity | √ | | √ | √ | √ |
| | Uplink and downlink fragment packet quantity | √ | | √ | √ | √ |
| | Syn packet quantity of a TCP session | √ | | √ | √ | √ |
| | Fin packet quantity of a TCP session | √ | | √ | √ | √ |
| | Ack packet quantity of a TCP session | √ | | √ | √ | √ |
| | Rst packet quantity of a TCP session | √ | | √ | √ | √ |
| | Urg packet quantity of a TCP session | √ | | √ | √ | √ |
| | Psh packet quantity of a TCP session | √ | | √ | √ | √ |
| Byte quantity information | Uplink and downlink byte quantity | √ | | √ | √ | √ |
| Time information | Session duration | √ | | √ | √ | √ |
| | Interval between uplink packets and an interval between downlink packets | √ | | √ | | √ |
| | Server response time of a TCP session, and a client response time of a TCP session | √ | | √ | √ | √ |

(continued)

| Category | Attribute | Gini coefficient | Information entropy | Convolution | Vector sum | Vector product |
|---|---|---|---|---|---|---|
| Other information | Health status of a TCP session | | | √ | | √ |
| | Uplink and downlink TCP out-of-order statistics collection | | | √ | √ | √ |
| | Uplink and downlink maximum or minimum TTL | √ | √ | √ | | √ |
| | Uplink and downlink maximum or minimum packet length | √ | √ | √ | | √ |

It should be noted that in Table-1, only examples of some types of characteristic information of a session are listed. In an actual application, the characteristic information of the session may further include: an average packet length, a longitude distance and a latitude distance between source geographic information and destination geographic information, an earth surface distance between the source geographic information and the destination geographic information, and the like. Therefore, an application range of each statistics collection method includes, but is not limited to, the characteristic information provided in Table-1.

The statistics collection methods listed above are respectively described below.

In an optional embodiment provided based on the embodiment shown in FIG. 3, characteristic information is a value representing a size, a statistics collection method is a statistics collection method for a Gini coefficient, and a statistical result is a Gini coefficient.

The Gini coefficient is an index that is defined by the American economist Albert O. Hirschman in 1943 according to the Lorenz curve (English: Lorenz curve) to determine an income distribution equality degree. The Gini coefficient is a ratio and ranges from 0 to 1. In this embodiment, distribution evenness degrees of values of characteristic information of sessions are reflected by using the Gini coefficient. In this embodiment, the Gini coefficient is used as characteristic reference in network attack analysis. When the Gini coefficient is relatively greatly different from a reference result, it may be determined that a network is abnormal. This is used as one of effective evidences for determining that the network is under a network attack. In this embodiment, the reference result is a Gini coefficient obtained through calculation by using the following steps when the network is not under a network attack.

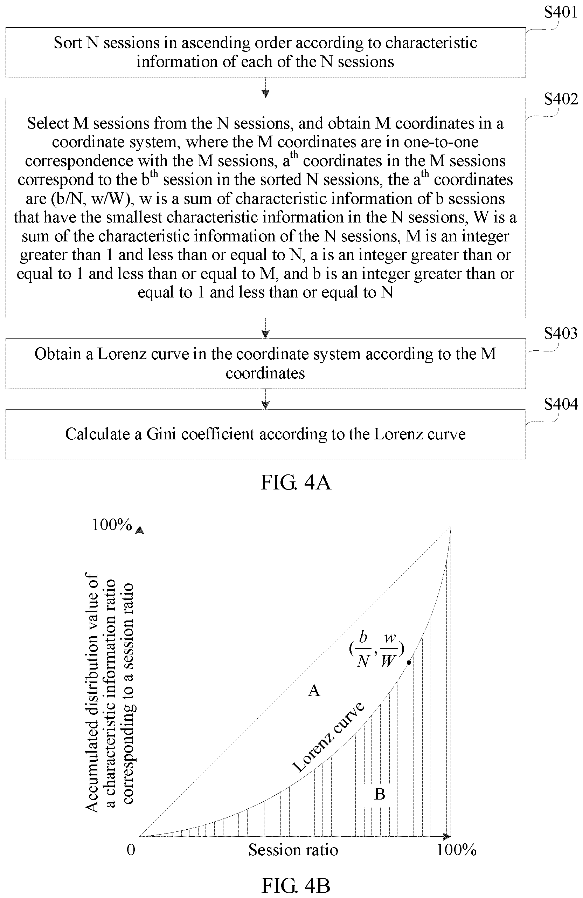

As shown in FIG. 4A, S302 shown in FIG. 3 may specifically include the following steps.

S401: Sort the N sessions in ascending order according to the characteristic information of each of the N sessions.
S402: Select M sessions from the N sessions, and obtain M coordinates in a coordinate system, where the M coordinates are in one-to-one correspondence with the M sessions, $a^{th}$ coordinates in the M sessions correspond to the $b^{th}$ session in the sorted N sessions, the $a^{th}$ coordinates are (b/N, w/W), w is a sum of the characteristic information of b sessions that have smallest characteristic information values in the N sessions, W is a sum of the characteristic information of the N sessions, M is an integer greater than 1 and less than or equal to N, a is an integer greater than or equal to 1 and less than or equal to M, and b is an integer greater than or equal to 1 and less than or equal to N.
S403: Obtain a Lorenz curve in the coordinate system according to the M coordinates.
S404: Calculate the Gini coefficient according to the Lorenz curve.

With reference to FIG. 4B, the horizontal axis represents a session ratio, and the vertical axis represents an accumulated distribution value of a characteristic information ratio corresponding to a session ratio. Specifically, assuming that a sum of the characteristic information of the b sessions that have smallest characteristic information values in the N sessions is w, and a sum of the characteristic information of all the N sessions is W, coordinates corresponding to the $b^{th}$ session in the sorted N sessions in step 401 are $(\frac{b}{N}, \frac{w}{W})$, that is, the $a^{th}$ coordinates in the M coordinates are

$(\frac{b}{N}, \frac{w}{W})$, as shown in FIG. 4B.

For example, the M coordinates obtained according to the method in S402 forms the Lorenz curve in the coordinate system. As shown in FIG. 4B, an area of an unshaded region enclosed by a line connecting coordinates (0, 0) to coordinates (1, 1) and the Lorenz curve is A, an area of a shaded region enclosed by the Lorenz curve and coordinate axis is B, and the Gini coefficient = $\dfrac{A}{A+B}$. According to this definition, when values the characteristic information of the N sessions are equal, the Gini coefficient is 0. When a value of characteristic information of one session is W, and values of characteristic information of other sessions are 0, the Gini coefficient is 1. As can be determined according to the foregoing definition, a larger Gini coefficient indicates a less even distribution of values of the characteristic information of the N sessions. On the contrary, a smaller Gini coefficient indicates a more even distribution of values of the characteristic information of the N sessions.

The statistics collection method for a Gini coefficient is described below by using some examples.

1. Characteristic information of a session is an average uplink packet length.

A Lorenz curve is constructed by using a session ratio as the horizontal axis, and by using an accumulated distribution value of an average uplink packet length ratio as the vertical axis. A Gini coefficient is calculated according to the Lorenz curve. For example, assuming that N = 10, average uplink packet lengths of the 10 sessions are 4, 4, 6, 8, 8, 8, 10, 12, 16, and 24 respectively in ascending order. For example, if it is selected that M = 5, 5 sessions are selected from the 10 sessions. The selected 5 sessions are the second session obtained after the sorting, the fourth session obtained after the sorting, the sixth session obtained after the sorting, the eighth session obtained after the sorting, and the tenth session obtained after the sorting. The M coordinates obtained in step 401 are respectively: (20%, 8%), (40%, 22%), (60%, 38%), (80%, 60%), and (100%, 100%). The Lorenz curve is obtained by sequentially connecting the foregoing coordinates, and then the Gini coefficient may be calculated according to the Lorenz curve.

In this example, the Gini coefficient reflects a distribution evenness degree of the average uplink packet lengths of the sessions. When a network is under a session-type network attack whose packet length is constant in a target time period, a difference between the Gini coefficient and a reference result is relatively large. For example, the Gini coefficient is obviously less than the reference result. Therefore, whether there is a network attack can be detected according to a difference between the Gini coefficient and the reference result.

2. Characteristic information of a session is a syn packet quantity in a TCP session.

A Lorenz curve is constructed by using a session ratio as the horizontal axis, and by using an accumulated distribution value of a syn packet quantity ratio as the vertical axis. A Gini coefficient is calculated according to the Lorenz curve. In this example, the Gini coefficient reflects a distribution evenness degree of syn packet quantities of TCP sessions. A syn packet is a packet sent by a client to a server when a TCP connection is established by using a three-way handshake, and the syn packet quantity is relatively small and stable. When the network is under a session-type network attack whose syn packet quantity is greater than a normal value in a target time period, in N sessions including a normal session and a session of the network attack, distribution of syn packet quantities becomes more uneven in comparison with a reference result. In this case, the Gini coefficient is greater than the reference result, and a difference between the Gini coefficient and the reference result is greater than a preset value. For example, a normal session has two syn packets in a three-way handshake process of the TCP, but the session-type network attack has more than two syn packets in a session. Therefore, whether there is a network attack can be detected according to a difference between the Gini coefficient and the reference result.

3. Characteristic information of a session is an earth surface distance between a source device and a destination device.

A Lorenz curve is constructed by using a session ratio as the horizontal axis, and by using an accumulated distribution value of an earth surface distance ratio between the source device and the destination device as the vertical axis. A Gini coefficient is calculated according to the Lorenz curve. The earth surface distance between the source device and the destination device may be determined according to source geographic information and destination geographic information. In this example, the Gini coefficient reflects a distribution evenness degree of earth surface distances corresponding to sessions. When a network is under a session-type network attack from a source device to a destination device in a target time period, a quantity of sessions whose earth surface distances are the same in N sessions increases in comparison with a reference result. The distribution of the earth surface distances becomes more even in comparison with the reference result. The Gini coefficient is less than the reference result, and a difference between the Gini coefficient and the reference result is greater than a preset value. Therefore, whether there is a network attack can be detected according to a difference between the Gini coefficient and the reference result.

Certainly, the foregoing examples are merely illustrative and explanatory. In addition to the characteristic information involved in the foregoing examples, the statistics collection method for a Gini coefficient may be further applicable to statistical analysis of various types of other characteristic information.

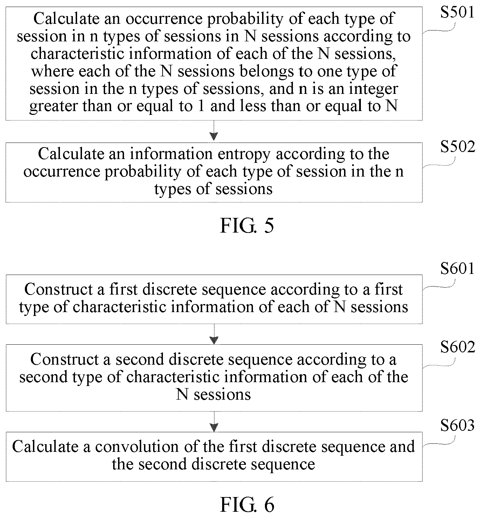

In another optional embodiment provided based on the embodiment shown in FIG. 3, a statistics collection method is a statistics collection method for an information entropy, and a statistical result is an information entropy. Correspondingly, as shown in FIG. 5, S302 may include the following steps:

S501: Calculate an occurrence probability of each type of session in n types of sessions in the N sessions according to the characteristic information of each of the N sessions, where each of the N sessions belongs to one type of session in the n types of sessions, and n is an integer greater than 1 and less than or equal to N.

S502: Calculate an information entropy according to the occurrence probability of each type of session in the n types of sessions.

The information entropy is an indicator used to measure an information amount included in a segment of information. The information entropy is mathematically a relatively abstract concept. The information entropy may be understood as an occurrence probability of particular information. A calculation formula of the information entropy is as follows:

$$H = \mathrm{E}[-\log p_i] = -\sum_{i=1}^{n} p_i \log p_i \tag{1},$$

where H represents the information entropy, n represents a quantity of types of values of an element, that is, a quantity of session types in this embodiment, $p_i$ represents an occurrence probability of an element of an ith type of value, where $1 \leq i \leq n$, both i and n are integers, that is, an occurrence probability of an ith type of session in this embodiment. A larger information entropy indicates that occurrence probabilities of elements are more even. On the contrary, a smaller information entropy indicates that occurrence probabilities of elements are more uneven.

In this embodiment, characteristic information of multiple sessions that belong to a same type of session is the same or belongs to a same classification standard. Each of the N sessions belongs to one type of session in the n types of sessions, and does not belong to other n-1 types of sessions. For example, characteristic information of a session is a source IP address of an uplink packet in the session. Source IP addresses of uplink packets in the N sessions have n different values. Sessions in which source IP addresses of the uplink packets are the same belong to the same type of session. For another example, characteristic information of a session is source IP addresses of uplink packets. A subnet segment to which source IP addresses of uplink packets in the N sessions belong has n different values. Sessions in which source IP addresses of uplink packets belong to a same subnet segment belong to a same type of session.

In this embodiment, the information entropy is used as a network attack. When a difference between the information entropy and a reference result is relatively large, it may be determined that a network is abnormal. This is used as one of effective evidences for determining that the network is under a network attack. In this embodiment, the reference result is an information entropy obtained through calculation by using the foregoing steps when the network is not under a network attack.

The statistics collection method for an information entropy is described below by using some examples.

1. Characteristic information of a session is a source IP address of an uplink packet, and sessions in which source IP addresses of uplink packets are the same belong to a same type of session.

For example, assuming that N = 10, source IP addresses of uplink packets of the 10 sessions are IP address 1, IP address 2, IP address 3, IP address 1, IP address 1, IP address 1, IP address 4, IP address 4, IP address 2, and IP address 1 respectively. When n = 4, the foregoing 10 sessions may be classified into four types. An occurrence probability of a type of session in which source IP address of an uplink packet is IP address 1 is 0.5. An occurrence probability of a type of session in which source IP address of an uplink packet is IP address 2 is 0.2. An occurrence probability of a type of session in which source IP address of an uplink packet is IP address 3 is 0.1. An occurrence probability of a type of session in which source IP address of an uplink packet is IP address 4 is 0.2. A quantity of types of sessions and the occurrence probability of each type of session are substituted into Formula (1) to calculate the information entropy.

In this example, the information entropy reflects an equality degree of the occurrence probabilities of various types of sessions in which source IP addresses of uplink packets are the same. For example, a larger information entropy indicates that occurrence probabilities of the foregoing four types of sessions are more even. A smaller information entropy indicates that occurrence probabilities of the foregoing four types of sessions are more uneven. For example, when the network is not under an attack, occurrence probabilities of sessions in which source IP addresses of uplink packets are the foregoing four source IP addresses are equal. When the network is under a network attack launched by a device of IP address 1 in a target time period, a ratio of sessions in which source IP address of an uplink packet is IP address 1 is higher than other types of sessions. In this case, the information entropy is less than the reference result. Therefore, whether there is a network attack can be detected according to a difference between the information entropy and the reference result. For example, when the information entropy is less than the reference result, and a difference between the reference result and the information entropy is greater than a preset value, it is determined that there is a network attack. In this example, the reference result is an information entropy obtained through calculation according to source IP addresses of uplink packets of multiple collected sessions when the network is not under a network attack.

Optionally, when it is determined that the network is under a network attack, a source IP address of an uplink packet in which occurrence probability obviously increases in comparison with a normal value may be extracted, and an IP address launching the network attack is further determined through analysis.

2. Characteristic information of a session is a source IP address of an uplink packet, and sessions in which source IP addresses of uplink packets belong to a same subnet segment belong to a same type of session.

For example, the source IP addresses of the uplink packets in the foregoing 10 sessions are still used as examples. It is assumed that IP address 1 and IP address 2 belong to a same subnet segment that is recorded as subnet segment 1, and IP address 3 and IP address 4 belong to a same subnet segment that is recorded as subnet segment 2. The foregoing 10 sessions may be classified into two types. An occurrence probability of a type of session in which source IP address of an uplink packet belongs to subnet segment 1 is 0.7. An occurrence probability of a type of session in which source IP address of an uplink packet belongs to subnet segment 2 is 0.3. A quantity of types of sessions and the occurrence probability of each type of session are substituted into Formula (1) to calculate the information entropy.

In this example, the information entropy reflects an equality degree of the occurrence probabilities of various types of sessions in which source IP addresses of uplink packets belong to a same subnet segment. When the network is under a session-type network attack from a subnet segment in a target time period, an occurrence probability of a type of session corresponding to the subnet segment is much greater than those of other types of sessions. In this case, the information entropy is obviously less than the reference result. Therefore, whether there is a network attack can be detected according to a difference between the information entropy and the reference result. In this example, the reference result is an information entropy obtained through calculation according to source IP addresses of uplink packets of multiple collected sessions when the network is not under a network attack. Optionally, when it is determined that the network is under a network attack, a subnet segment whose occurrence probability obviously increases in comparison with a normal value may be extracted, and a subnet segment launching the network attack is further determined through analysis.

3. Characteristic information of a session is an uplink packet quantity, and sessions whose uplink packet quantities belong to a same value interval belong to a same type of session.

For example, n = 3, that is, the N sessions are classified into three types according to characteristic information of the quantity of uplink packets: (a) An uplink packet quantity is greater than or equal to 1 and is less than or equal to 2; (b) the uplink packet quantity is greater than or equal to 3 and is less than or equal to 10; (c) the uplink packet quantity is greater than 10. Assuming that N = 10, uplink packet quantities of the 10 sessions are 1, 1, 1, 4, 6, 1, 1, 6, 12, and 1 respectively. An occurrence probability of a type of session whose uplink packet quantity belongs to the value interval (a) is 0.6. An occurrence probability of a type of session whose uplink packet quantity belongs to the value interval (b) is 0.3. An occurrence probability of a type of session whose uplink packet quantity belongs to the value interval (c) is 0.1. A quantity of types of sessions and the occurrence probability of each type of session are substituted into Formula (1) to calculate the information entropy.

In this example, the information entropy reflects an equality degree of the occurrence probabilities of various types of sessions whose uplink packet quantities belong to difference value intervals. When the network is under the session-type network attack with many empty sessions in a target time period, for example, if a network attack session includes only a packet used to request to establish a session, but does not include a packet used to transmit data, an occurrence probability of a type of session in the value interval (a) is much greater than those of other types of sessions. In this case, the information entropy is obviously less than the reference result. Therefore, whether there is a network attack can be detected according to a difference between the information entropy and the reference result.

Certainly, the foregoing examples are merely illustrative and explanatory. In addition to the characteristic information involved in the foregoing examples, the statistics collection method for an information entropy may be further applicable to statistical analysis of various types of other characteristic information.

In another optional embodiment provided based on the embodiment shown in FIG. 3, a statistics collection method is a statistics collection method for a convolution, and a statistical result is a convolution. Characteristic information of each of N sessions includes a first type of characteristic information and a second type of characteristic information. The first type of characteristic information is a value representing a size, and the second type of characteristic information is a value representing a size. Correspondingly, as shown in FIG. 6, S302 may include the following steps:

S601: Construct a first discrete sequence according to the first type of characteristic information of each of the N sessions.
S602: Construct a second discrete sequence according to the second type of characteristic information of each of the N sessions.
S603: Calculate a convolution of the first discrete sequence and the second discrete sequence.

In addition, in this embodiment, an execution order of S601 and S602 is not limited. S601 may be performed before S602, or may be performed after S602, or may be performed at the same time when S602 is performed. In FIG. 6, only an example in which S601 is performed before S602 is used, but this does not constitute any limitation on this application.

The convolution is a result obtained by multiplying two variables in a range to obtain a product and then adding up the products. In this embodiment, both the two variables are discrete variables. Correspondingly, the convolution is a discrete convolution. A calculation formula of the convolution is as follows:

$$y(n) = x(n) * h(n) = \sum_{i=1}^{N} x(i)h(n-i) \qquad (2),$$

where * represents a convolution operation, $x(n)$ and $h(n)$ respectively correspond to the first discrete sequence and the second discrete sequence, $y(n)$ is a discrete sequence obtained after the convolution operation, the first discrete sequence $x(n)$ is a sequence formed by the first type of characteristic information of each of the N sessions, an ith element in the first discrete sequence $x(n)$ represents first type of characteristic information of an ith session, the second discrete sequence $h(n)$ is a sequence formed by the second type of characteristic information of each of the N sessions, an ith element in the second discrete sequence $x(n)$ represents second type of characteristic information of an ith session, a convolution operation result $y(n)$ represents an association relationship between the first type of characteristic information and the second type of characteristic information, and both the first type of characteristic information and the second type of characteristic information are represented by using values indicating sizes.

In this embodiment, the convolution is used as a characteristic reference of network attack analysis. When the convolution is relatively greatly different from a reference result, it may be determined that a network is abnormal. This is used as one of effective evidences for determining that the network is under a network attack. In this embodiment, the reference result is an information entropy obtained through calculation by using the foregoing steps when the network is not under a network attack.

The statistics collection method for a convolution is described below by using some examples.

1. A first type of characteristic information is a start moment of a session, and a second type of characteristic information is session duration.

For example, the reference moment may be set to 0. The start moment of the session is expressed as a time interval relative to the reference moment. The start moment of the session is converted to a value indicating a size. For example, if the reference moment is 0, the reference moment is 11: 20, and the start moment is 15 seconds later than the reference moment, the start moment is 15. The start moment of the session may be a moment at which a network device obtaining characteristic information of the session receives a first packet in the session, or may be time stamp information in a first packet of the session. This is not limited in this application. The session duration refers to a time length from the start moment to an end moment of the session. The first discrete sequence $x(n)$ is constructed according to the start moment of each of the N sessions. The ith element in the first discrete sequence $x(n)$ represents a start moment of the ith session. The second discrete sequence $h(n)$ is constructed according to the session duration of each of the N sessions. The ith element in the second discrete sequence $h(n)$ represents session duration of the ith session. The convolution of the first discrete sequence $x(n)$ and the second discrete sequence $h(n)$ is calculated according to Formula (2).

In this example, the convolution is used to reflect a probability density distribution of the session duration in a time domain, and represents a distribution characteristic of the session duration of the N sessions in the time domain. When a network is under many session-type network attacks whose session duration is very short in a target time period, distribution densities of sessions having very short session duration obviously increase in the time domain in comparison with the reference result. For example, a session having very short duration may be a session that includes only one or two packets. For example, if a network attack manner is only initiating a session establishment request, and making no response, the session ends after an attacked device sends a response packet. However, a normal session has a complete establishment process and data interaction. Therefore, session duration is longer than that of a session of this type of network attack. Therefore, whether there is a network attack can be detected according to a difference between a convolution calculation result and the reference result.

2. A first type of characteristic information of each session is session duration, and a second type of characteristic information is an average packet length.

The first discrete sequence $x(n)$ is constructed according to the session duration of each of the N sessions. The ith element in the first discrete sequence $x(n)$ represents the session duration of the ith session. The second discrete sequence $h(n)$ is constructed according to the average packet length of each of the N sessions. The ith element in the second discrete sequence $h(n)$ represents the average packet length of the ith session. The convolution of the first discrete sequence $x(n)$ and the second discrete sequence $h(n)$ is calculated according to Formula (2).

When a network is under many session-type network attacks whose session duration is very short and in which average packet lengths are relatively small in a target time period, for example, a synchronous flood attack, a convolution calculation result is obviously different from a reference result. Therefore, whether there is a network attack can be detected according to a difference between the convolution calculation result and the reference result.

3. A first type of characteristic information of each session is a start moment of the session, and a second type of characteristic information is an uplink minimum packet length.

The first discrete sequence $x(n)$ is constructed according to the start moment of each of the N sessions. The ith element in the first discrete sequence $x(n)$ represents a start moment of the ith session. The second discrete sequence $h(n)$ is constructed according to the uplink minimum packet length of each of the N sessions. The ith element in the second discrete sequence $h(n)$ represents an uplink minimum packet length of the ith session. The convolution of the first discrete sequence $x(n)$ and the second discrete sequence $h(n)$ is calculated according to Formula (2).

In this example, the convolution is used to reflect a probability density distribution of the uplink minimum packet length in a time domain. When the network is under many session-type network attacks whose packet lengths are very short in a target time period, the statistical result is greater than the reference result, and a difference between the statistical result and the reference result is greater than a preset value. Therefore, whether there is a network attack can be detected according to a difference between the convolution calculation result and the reference result.

Certainly, the foregoing examples are merely illustrative and explanatory. In addition to the characteristic information involved in the foregoing examples, the statistics collection method for a convolution may be further applicable to statistical analysis of various types of other characteristic information.

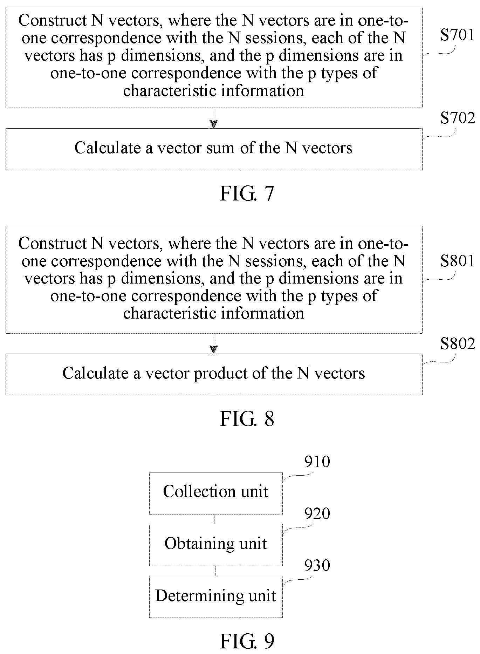

In another optional embodiment provided based on the embodiment shown in FIG. 3, a statistics collection method is a statistics collection method for a vector sum, a statistical result is a vector sum, characteristic information of each of the N sessions includes p types of characteristic information, and p is an integer greater than 1. Correspondingly, as shown in FIG. 7, S302 includes the following steps:

S701: Construct N vectors, where the N vectors are in one-to-one correspondence with the N sessions, each of the N vectors has p dimensions, and the p dimensions are in one-to-one correspondence with the p types of characteristic information.

S702: Calculate a vector sum of the N vectors.

Specifically, a dimension of a vector corresponds to characteristic information of the session. This means that a value of the dimension may be equal to a value of the characteristic information, or a ratio of a value of the dimension to that of the characteristic information may be constant.

For example, a value of a first dimension of a vector corresponds to an uplink packet quantity of a session, and a value of a second dimension of the vector corresponds to a downlink packet quantity of the session. For another example, a value of a first dimension of a vector corresponds to the longitude of destination geographic information of an uplink packet of a session, and a value of a second dimension of the vector corresponds to the latitude of the destination geographic information of the uplink packet of the session.

In this embodiment, the vector sum is used as a characteristic reference of network attack analysis. When the vector sum is relatively greatly different from a reference result, it may be determined that a network is abnormal. This is used as one of effective evidences for determining that the network is under a network attack. In this embodiment, the reference result is a vector sum obtained through calculation by using the foregoing steps when the network is not under a network attack. For example, when a size of the vector sum is greatly different from a size of the reference result, and an included angle $\theta$ between a direction of the vector sum and a direction of the reference result is greater than a particular value, it is determined that there is a network attack.

The statistics collection method for a vector sum is described below by using some examples.

1. Characteristic information of each session includes the longitude of destination geographic information of an uplink packet and the latitude of the destination geographic information of the uplink packet.

An eigenvector corresponding to each session is constructed by using longitude and latitude coordinates of destination geographic information of an uplink packet of the session, and a vector sum of eigenvectors corresponding to the sessions are calculated. The eigenvector corresponding to each session is a two-dimensional eigenvector. Two dimensions of the eigenvector respectively correspond to the longitude and the latitude of the destination geographic information of the uplink packet.

When a network is under a session-type network attack that targets a region in a target time period, a difference between the vector sum and a reference result is greater than a preset condition. For example, vector lengths of the statistical result and the reference result are greater than a preset value, and/or the foregoing included angle $\theta$ is greater than a preset value. Therefore, whether there is a network attack can be detected according to the difference between the vector sum and the reference result.

Optionally, when it is determined that there is a network attack, destination geographic information of an uplink packet that causes the foregoing obvious difference of the vector sum may be extracted, and a region under the network attack is further determined through analysis.

2. Characteristic information of each session includes an uplink packet quantity and a downlink packet quantity.

An eigenvector corresponding to each session is constructed by using the uplink packet quantity and the downlink packet quantity of the session, and a vector sum of eigenvectors corresponding to the sessions are calculated. The eigenvector corresponding to each session is a two-dimensional eigenvector. Two dimensions of the eigenvector respectively correspond to the uplink packet quantity and the downlink packet quantity.

When a network is under a session-type network attack that has many uplink packets in a target time period, because the uplink packet quantity obvious increases in comparison with a normal case, a difference between a statistical result and a reference result is greater than a preset condition. Therefore, whether there is a network attack can be detected according to the difference between the vector sum and the reference result.

3. Characteristic information of each session includes an uplink byte quantity and a downlink byte quantity.

An eigenvector corresponding to each session is constructed by using the uplink byte quantity and the downlink byte quantity of the session, and a vector sum of eigenvectors corresponding to the sessions are calculated. The eigenvector corresponding to each session is a two-dimensional eigenvector. Two dimensions of the eigenvector respectively correspond to the uplink byte quantity and the downlink byte quantity.

When a network is under a session-type network attack with many bytes in a target time period, because the uplink byte quantity obvious increases, a difference between a statistical result and a reference result is greater than a preset condition. Therefore, whether there is a network attack can be detected according to the difference between the vector sum and the reference result.

Certainly, the foregoing examples are merely illustrative and explanatory. In addition to the characteristic information involved in the foregoing examples, the statistics collection method for a vector sum may be further applicable to statistical analysis of various types of other characteristic information.

In another optional embodiment provided based on the embodiment shown in FIG. 3, a statistics collection method is a statistics collection method for a vector product, and a statistical result is a vector product. Characteristic information of each of the N sessions includes p types of characteristic information, and p is an integer greater than 1. Correspondingly, as shown in FIG. 7, S302 includes the following steps:

S801: Construct N vectors, where the N vectors are in one-to-one correspondence with the N sessions, each of the N vectors has p dimensions, and the p dimensions are in one-to-one correspondence with the p types of characteristic information.
S802: Calculate a vector product of the N vectors.

In this embodiment, the vector product is used as a characteristic reference of a network attack. When the vector product is relatively greatly different from a reference result, it may be determined that a network is abnormal. This is used as one of effective evidences for determining that the network is under a network attack. In this embodiment, the reference result is a vector product obtained through calculation by using the foregoing steps when the network is not under a network attack. For example, when the statistical result and the reference result are greater than a preset condition, it is determined that there is a network attack. In addition, in an example in which a statistics collection method for a vector product is used, refer to the foregoing example in which the statistics collection method for a vector sum is used. Details are not described herein again.

In this embodiment of this application, multiple statistics collection methods are provided. In an actual application, the session-type network attack may be analyzed and detected by using any one of the foregoing methods or a combination thereof.

A device embodiment of this application is described below, and may be used to execute the method embodiments of this application. For details that are not disclosed in the device embodiment of this application, refer to the method embodiments of this application.

Referring to FIG. 9, FIG. 9 is a block diagram of a device for detecting a network attack according to another embodiment of this application. The device may include: a collection unit 910, an obtaining unit 920, and a determining unit 930.

The collection unit 910 is configured to collect characteristic information of each of N sessions in a network, where N is an integer greater than 1.

The obtaining unit 920 is configured to: obtain a statistical result, and send the statistical result to the determining unit 930, where the statistical result is a result obtained by collecting statistics on the characteristic information of the N sessions by using each of the N sessions collected by the collection unit 910 as a sampling unit and by using the characteristic information as a sample value.

The determining unit 930 is configured to: if a difference between the statistical result received from the obtaining unit 920 and a reference result exceeds a preset condition, determine that the network is under a network attack.

In conclusion, in the device provided in this embodiment, characteristic information of each of multiple sessions in a network is collected to obtain a statistical result, and when a difference between the statistical result and a reference result exceeds a preset condition, it is determined that the network is under a network attack. Statistical analysis is performed on characteristic information of a session by means of random session sampling by using a session as a unit. In this way, a session-type network attack that is difficult to be detected by means of conventional packet random sampling can be effectively detected. The session-type network attack has the following characteristics: A device initiating a network attack occupies a resource of a target device by initiating many sessions. A session is initiated only by using few packets, but occupies many resources of a device. Therefore, the target device may be relatively greatly damaged even if there are a few network attack packets. If a packet is used as a sampling unit, because a network attack packet satisfying the foregoing characteristic of the session-type network attack occupies a very small proportion in data traffic, it is difficult to collect this type of network attack packet. In this application, a session is used as a sampling unit. Both a network attack packet that has only one session establishment request and a normal session that includes relatively large data traffic are used as a session in sampling statistics collection. Therefore, there is a relatively large probability of identifying the session-type network attack.

In an optional embodiment provided based on the embodiment shown in FIG. 9, characteristic information is a value representing a size, and a statistical result is a Gini coefficient. The obtaining unit 920 is specifically configured to: sort the N sessions in ascending order according to the characteristic information of each of the N sessions that is collected by the collection unit 910; select M sessions from the N sessions, and obtain M coordinates in a coordinate system, where the M coordinates are in one-to-one correspondence with the M sessions, ath coordinates in the M sessions correspond to the bth session in the N sessions, the ath coordinates are (b/N, w/W), w is a sum of characteristic information of b sessions that have the smallest characteristic information in the N sessions, W is a sum of the characteristic information of the N sessions, M is an integer greater than 1 and less than or equal to N, a is an integer greater than or equal to 1 and less than or equal to M, and b is an integer greater than or equal to 1 and less than or equal to N; obtain a Lorenz curve in the coordinate system according to the M coordinates; and calculate the Gini coefficient according to the Lorenz curve.

In another optional embodiment provided based on the embodiment shown in FIG. 9, the statistical result is an information entropy. The obtaining unit 920 is specifically configured to: calculate an occurrence probability of each type of session in n types of sessions in the N sessions according to the characteristic information of each of the N sessions that is collected by the collection unit 910, where each of the N sessions belongs to one type of session in the n types of sessions, and n is an integer greater than and less than or equal to N; and calculate the information entropy according to the occurrence probability of each type of session in the n types of sessions.

In another optional embodiment provided based on the embodiment shown in FIG. 9, the statistical result is a convolution, and the characteristic information of each of the N sessions includes a first type of characteristic information and a second type of characteristic information, where the first type of characteristic information is a value representing a size, and the second type of characteristic information is a value representing a size. The obtaining unit 920 is specifically configured to: construct a first discrete sequence according to the first type of characteristic information of each of the N sessions that is collected by the collection unit 910; construct a second discrete sequence according to the second type of characteristic information of each of the N sessions that is collected by the collection unit 910; and calculate the convolution of the first discrete sequence and the second discrete sequence.

In another optional embodiment provided based on the embodiment shown in FIG. 9, the statistical result is a vector sum, characteristic information of each of the N sessions includes p types of characteristic information, and p is an integer greater than 1. The obtaining unit 920 is specifically configured to: construct N vectors, where the N vectors are in one-to-one correspondence with the N sessions, each of the N vectors has p dimensions, and the p dimensions are in one-to-one correspondence with the p types of characteristic information; and calculate the vector sum of the N vectors.

In another optional embodiment provided based on the embodiment shown in FIG. 9, the statistical result is a vector product, characteristic information of each of the N sessions includes p types of characteristic information, and p is an integer greater than 1. The obtaining unit 920 is specifically configured to: construct N vectors, where the N vectors are in one-to-one correspondence with the N sessions, each of the N vectors has p dimensions, and the p dimensions are in one-to-one correspondence with the p types of characteristic information; and calculate the vector product of the N vectors.

Optionally, the characteristic information includes one or more of 5-tuple information, packet quantity information, byte quantity information, time information, information about a TTL, packet length information, geographic information, or an average packet length.

Optionally, in another optional embodiment provided based on the embodiment shown in FIG. 9, the determining unit 930 is further configured to: determine a source of a network attack according to the statistical result received from the obtaining unit 920; or determine a target of a network attack according to the statistical result received from the obtaining unit 920.

It should be noted that, when functions of the device provided in the foregoing embodiment are implemented by the device, division of the foregoing function modules is used as an example for illustration. In actual application, the foregoing functions can be allocated to different function modules and implemented according to a requirement, that is, an inner structure of a device is divided into different function modules to implement all or a part of the functions described above. In addition, the device provided in the foregoing embodiment belongs to the same idea as the method embodiment. Refer to the method embodiment for details of a specific implementation process, which is not described repeatedly herein.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely examples of embodiments of the present application, but are not intended to limit the present application. Any modification, equivalent replacement, or improvement made without departing from the spirit and principle of the present application should fall within the protection scope of the present application.

**Claims**

1. A method for detecting a network attack, wherein the method comprises:

   collecting characteristic information of each of N sessions in a network, wherein N is an integer greater than 1;
   obtaining a statistical result, wherein the statistical result is a result obtained by collecting statistics on the characteristic information of the N sessions by using each of the N sessions as a sampling unit and by using the characteristic information as a sample value; and
   if a difference between the statistical result and a reference result exceeds a preset condition, determining that the network is under a network attack.

2. The method according to claim 1, wherein the characteristic information is a value representing a size, and the statistical result is a Gini coefficient; and the obtaining a statistical result comprises:

   sorting the N sessions in ascending order according to the characteristic information;
   selecting M sessions from the N sessions, and obtaining M coordinates in a coordinate system, wherein the M coordinates are in one-to-one correspondence with the M sessions, $a^{th}$ coordinates in the M sessions correspond to the $b^{th}$ session in the sorted N sessions, the $a^{th}$ coordinates are (b/N, w/W), w is a sum of characteristic information of b sessions that have the smallest characteristic information in the N sessions, W is a sum of the characteristic information of the N sessions, M is an integer greater than 1 and less than or equal to N, a is an integer greater than or equal to 1 and less than or equal to M, and b is an integer greater than or equal to 1 and less than or equal to N;
   obtaining a Lorenz curve in the coordinate system according to the M coordinates; and
   calculating the Gini coefficient according to the Lorenz curve.

3. The method according to claim 1, wherein the statistical result is an information entropy, and the obtaining a statistical result comprises:

   calculating an occurrence probability of each type of session in n types of sessions in the N sessions according to the characteristic information of each of the N sessions, wherein each of the N sessions belongs to one type of session in the n types of sessions, and n is an integer greater than or equal to 1 and less than or equal to N; and calculating the information entropy according to the occurrence probability of each type of session in the n types of sessions.

4. The method according to claim 1, wherein the statistical result is a convolution, and the characteristic information of each of the N sessions comprises a first type of characteristic information and a second type of characteristic information, wherein the first type of characteristic information is a value representing a size, and the second type of characteristic information is a value representing a size; and the obtaining a statistical result comprises:

constructing a first discrete sequence according to the first type of characteristic information of each of the N sessions;
constructing a second discrete sequence according to the second type of characteristic information of each of the N sessions; and
calculating the convolution of the first discrete sequence and the second discrete sequence.

5. The method according to claim 1, wherein the statistical result is a vector sum, and the characteristic information of each of the N sessions comprises p types of characteristic information, wherein p is an integer greater than 1; and the obtaining a statistical result comprises:

constructing N vectors, wherein the N vectors are in one-to-one correspondence with the N sessions, each of the N vectors has p dimensions, and the p dimensions are in one-to-one correspondence with the p types of characteristic information; and
calculating the vector sum of the N vectors.

6. The method according to claim 1, wherein the statistical result is a vector product, and the characteristic information of each of the N sessions comprises p types of characteristic information, wherein p is an integer greater than 1; and the obtaining a statistical result comprises:

constructing N vectors, wherein the N vectors are in one-to-one correspondence with the N sessions, each of the N vectors has p dimensions, and the p dimensions are in one-to-one correspondence with the p types of characteristic information; and
calculating the vector product of the N vectors.

7. The method according to any one of claims 1 to 6, after the determining that the network is under a network attack, further comprising:

determining a source of the network attack according to the statistical result; or
determining a target of the network attack according to the statistical result.

8. A device for detecting a network attack, wherein the device comprises:

a collection unit, configured to collect characteristic information of each of N sessions in a network, wherein N is an integer greater than 1;
an obtaining unit, configured to obtain a statistical result, wherein the statistical result is a result obtained by collecting statistics on the characteristic information of the N sessions by using each of the N sessions as a sampling unit and by using the characteristic information as a sample value; and
a determining unit, configured to: if a difference between the statistical result and a reference result exceeds a preset condition, determine that the network is under a network attack.

9. The device according to claim 8, wherein the characteristic information is a value representing a size, and the statistical result is a Gini coefficient; and
the obtaining unit is specifically configured to:

sort the N sessions in ascending order according to the characteristic information;
select M sessions from the N sessions, and obtain M coordinates in a coordinate system, wherein the M coordinates are in one-to-one correspondence with the M sessions, $a^{th}$ coordinates in the M sessions correspond to the $b^{th}$ session in the sorted N sessions, the $a^{th}$ coordinates are (b/N, w/W), w is a sum of characteristic information of b sessions that have smallest characteristic information in the N sessions, W is a sum of the characteristic information of the N sessions, M is an integer greater than 1 and less than or equal to N, a is an integer greater than or equal to 1 and less than or equal to M, and b is an integer greater than or equal to 1 and less than or equal to N;

obtain a Lorenz curve in the coordinate system according to the M coordinates; and

calculate the Gini coefficient according to the Lorenz curve.

10. The device according to claim 8, wherein the statistical result is an information entropy; and
the obtaining unit is specifically configured to:

calculate an occurrence probability of each type of session in n types of sessions in the N sessions according to the characteristic information of each of the N sessions, wherein each of the N sessions belongs to one type of session in the n types of sessions, and n is an integer greater than or equal to 1 and less than or equal to N; and
calculate the information entropy according to the occurrence probability of each type of session in the n types of sessions.

11. The device according to claim 8, wherein the statistical result is a convolution, and the characteristic information of each of the N sessions comprises a first type of characteristic information and a second type of characteristic information, wherein the first type of characteristic information is a value representing a size, and the second type of characteristic information is a value representing a size; and
the obtaining unit is specifically configured to:

construct a first discrete sequence according to the first type of characteristic information of each of the N sessions;
construct a second discrete sequence according to the second type of characteristic information of each of the N sessions; and
calculate the convolution of the first discrete sequence and the second discrete sequence.

12. The device according to claim 8, wherein the statistical result is a vector sum, and the characteristic information of each of the N sessions comprises p types of characteristic information, wherein p is an integer greater than 1; and
the obtaining unit is specifically configured to:

construct N vectors, wherein the N vectors are in one-to-one correspondence with the N sessions, each of the N vectors has p dimensions, and the p dimensions are in one-to-one correspondence with the p types of characteristic information; and
calculate the vector sum of the N vectors.

13. The device according to claim 8, wherein the statistical result is a vector product, and the characteristic information of each of the N sessions comprises p types of characteristic information, wherein p is an integer greater than 1; and
the obtaining unit is specifically configured to:

construct N vectors, wherein the N vectors are in one-to-one correspondence with the N sessions, each of the N vectors has p dimensions, and the p dimensions are in one-to-one correspondence with the p types of characteristic information; and
calculate the vector product of the N vectors.

14. The device according to any one of claims 8 to 13, wherein the determining unit is further configured to:

determine a source of the network attack according to the statistical result; or
determine a target of the network attack according to the statistical result.

15. A device for detecting a network attack, wherein the device comprises: a processor and a network interface, wherein the processor is configured to perform the following operations:

collecting characteristic information of each of N sessions in a network by using the network interface, wherein N is an integer greater than 1;
obtaining a statistical result, wherein the statistical result is a result obtained by collecting statistics on the characteristic information of the N sessions by using each of the N sessions as a sampling unit and by using the characteristic information as a sample value; and

if a difference between the statistical result and a reference result exceeds a preset condition, determining that the network is under a network attack.

16. The device according to claim 15, wherein the characteristic information is a value representing a size, and the statistical result is a Gini coefficient; and the obtaining a statistical result comprises:

sorting the N sessions in ascending order according to the characteristic information;
selecting M sessions from the N sessions, and obtaining M coordinates in a coordinate system, wherein the M coordinates are in one-to-one correspondence with the M sessions, $a^{th}$ coordinates in the M sessions correspond to the $b^{th}$ session in the sorted N sessions, the $a^{th}$ coordinates are (b/N, w/W), w is a sum of characteristic information of b sessions that have smallest characteristic information in the N sessions, W is a sum of the characteristic information of the N sessions, M is an integer greater than 1 and less than or equal to N, a is an integer greater than or equal to 1 and less than or equal to M, and b is an integer greater than or equal to 1 and less than or equal to N;
obtaining a Lorenz curve in the coordinate system according to the M coordinates; and
calculating the Gini coefficient according to the Lorenz curve.

17. The device according to claim 15, wherein the statistical result is an information entropy, and the obtaining a statistical result comprises:

calculating an occurrence probability of each type of session in n types of sessions in the N sessions according to the characteristic information of each of the N sessions, wherein each of the N sessions belongs to one type of session in the n types of sessions, and n is an integer greater than or equal to 1 and less than or equal to N; and
calculating the information entropy according to the occurrence probability of each of the n types of sessions.

18. The device according to claim 15, wherein the statistical result is a convolution, and the characteristic information of each of the N sessions comprises a first type of characteristic information and a second type of characteristic information, wherein the first type of characteristic information is a value representing a size, the second type of characteristic information is a value representing a size; and the obtaining a statistical result comprises:

constructing a first discrete sequence according to the first type of characteristic information of each of the N sessions;
constructing a second discrete sequence according to the second type of characteristic information of each of the N sessions; and
calculating the convolution of the first discrete sequence and the second discrete sequence.

19. The device according to claim 15, wherein the statistical result is a vector sum, and the characteristic information of each of the N sessions comprises p types of characteristic information, wherein p is an integer greater than 1; and the obtaining a statistical result comprises:

constructing N vectors, wherein the N vectors and the N sessions have a one-to-one correspondence, each of the N vectors has p dimensions, and the p dimensions and the p types of characteristic information have a one-to-one correspondence; and
calculating the vector sum of the N vectors.

20. The device according to claim 15, wherein the statistical result is a vector product, and the characteristic information of each of the N sessions comprises p types of characteristic information, wherein p is an integer greater than 1; and the obtaining a statistical result comprises:

constructing N vectors, wherein the N vectors are in one-to-one correspondence with the N sessions, each of the N vectors has p dimensions, and the p dimensions are in one-to-one correspondence with the p types of characteristic information; and
calculating the vector product of the N vectors.

21. The device according to any one of claims 15 to 20, wherein the processor is further configured to perform the following operation:

determining a source of the network attack according to the statistical result; or

determining a target of the network attack according to the statistical result.

FIG. 1

```
                    210                         230
          ┌─────────────────┐      ┌─────────────────┐
          │    Processor    │      │     Network     │
          │                 │      │    interface    │
          └─────────────────┘      └─────────────────┘
                    │                        │
   ◄────────────────┴────────────────────────┴──────────────────►
                              Bus                        240
                                         │
                 ┌───────────────────────┴──────────────────┐
                 │        ┌─────────────────┐  222           │  220
                 │        │    Operating    │                │
                 │        │     System      │                │
                 │        └─────────────────┘                │
                 │                                           │
                 │   ┌───────────────────────────────────┐   │
                 │   │   Collection module 224a          │   │
                 │   ├───────────────────────────────────┤   │  224
                 │   │   Obtaining module 224b           │   │
                 │   ├───────────────────────────────────┤   │
                 │   │   Determining module 224c         │   │
                 │   └───────────────────────────────────┘   │
                 │     Application program module            │
                 │                                           │
                 │                Memory                     │
                 └───────────────────────────────────────────┘

                     Detection device 200
```

FIG. 2

```
                                                            S301
┌──────────────────────────────────────────────────┐
│  Collect characteristic information of each of N   │
│  sessions in a network, where N is an integer      │
│  greater than 1                                    │
└──────────────────────────────────────────────────┘
                        │
                        ▼                               S302
┌──────────────────────────────────────────────────┐
│  Obtain a statistical result, where the statistical│
│  result is a result obtained by collecting         │
│  statistics on the characteristic information of   │
│  the N sessions by using each of the N sessions as │
│  a sampling unit and by using the characteristic   │
│  information as a sample value                     │
└──────────────────────────────────────────────────┘
                        │
                        ▼                               S303
┌──────────────────────────────────────────────────┐
│  If a difference between the statistical result and│
│  a reference result exceeds a preset condition,    │
│  determine that the network is under a network     │
│  attack                                            │
└──────────────────────────────────────────────────┘
```

FIG. 3

| | S401 |
|---|---|
| Sort N sessions in ascending order according to characteristic information of each of the N sessions | |

| | S402 |
|---|---|
| Select M sessions from the N sessions, and obtain M coordinates in a coordinate system, where the M coordinates are in one-to-one correspondence with the M sessions, a$^{th}$ coordinates in the M sessions correspond to the b$^{th}$ session in the sorted N sessions, the a$^{th}$ coordinates are (b/N, w/W), w is a sum of characteristic information of b sessions that have the smallest characteristic information in the N sessions, W is a sum of the characteristic information of the N sessions, M is an integer greater than 1 and less than or equal to N, a is an integer greater than or equal to 1 and less than or equal to M, and b is an integer greater than or equal to 1 and less than or equal to N | |

| | S403 |
|---|---|
| Obtain a Lorenz curve in the coordinate system according to the M coordinates | |

| | S404 |
|---|---|
| Calculate a Gini coefficient according to the Lorenz curve | |

FIG. 4A

FIG. 4B

Calculate an occurrence probability of each type of session in n types of sessions in N sessions according to characteristic information of each of the N sessions, where each of the N sessions belongs to one type of session in the n types of sessions, and n is an integer greater than or equal to 1 and less than or equal to N — S501

Calculate an information entropy according to the occurrence probability of each type of session in the n types of sessions — S502

FIG. 5

Construct a first discrete sequence according to a first type of characteristic information of each of N sessions — S601

Construct a second discrete sequence according to a second type of characteristic information of each of the N sessions — S602

Calculate a convolution of the first discrete sequence and the second discrete sequence — S603

FIG. 6

Construct N vectors, where the N vectors are in one-to-
one correspondence with the N sessions, each of the N    S701
vectors has p dimensions, and the p dimensions are in
one-to-one correspondence with the p types of
characteristic information

Calculate a vector sum of the N vectors    S702

FIG. 7

Construct N vectors, where the N vectors are in one-to-
one correspondence with the N sessions, each of the N    S801
vectors has p dimensions, and the p dimensions are in
one-to-one correspondence with the p types of
characteristic information

Calculate a vector product of the N vectors    S802

FIG. 8

910

Collection unit

920

Obtaining unit

930

Determining unit

FIG. 9

<table>
<tr><td colspan="2"><h1 style="text-align:center">INTERNATIONAL SEARCH REPORT</h1></td><td>International application No.<br><br>**PCT/CN2016/081503**</td></tr>
</table>

**A. CLASSIFICATION OF SUBJECT MATTER**

H04L 29/06 (2006.01) i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: information entropy, network, attack, statistics, session, feature, threshold, length, address, size, entropy, Gini coefficient, vector, convolution

**C. DOCUMENTS CONSIDERED TO BE RELEVANT**

| Category* | Citation of document, with indication, where appropriate, of the relevant passages | Relevant to claim No. |
|---|---|---|
| X | CN 102882894 A (HANGZHOU DPTECH TECHNOLOGIES CO., LTD.), 16 January 2013 (16.01.2013), description, paragraphs 0009 and 0024-0055, and figures 1-3 | 1-21 |
| A | CN 104796405 A (SANGFOR INC.), 22 July 2015 (22.07.2015), the whole document | 1-21 |
| A | JP 2007060379 A (NIPPON TELEGRAPH & TELEPHONE CORP.), 08 March 2007 (08.03.2007), the whole document | 1-21 |
| A | CN 105530243 A (INFORMATION CENTER OF CHINA SOUTHERN POWER GRID CO., LTD. et al.), 27 April 2016 (27.04.2016), the whole document | 1-21 |
| A | US 2013042322 A1 (ELECTRONICS AND TELECOMMUNICATIONS RESEARCH INSTITUTE), 14 February 2013 (14.02.2013), the whole document | 1-21 |
| A | CN 102202064 A (LIU, Shengli), 28 September 2011 (28.09.2011), the whole document | 1-21 |

☐ Further documents are listed in the continuation of Box C.     ☒ See patent family annex.

| | | |
|---|---|---|
| *   Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
|---|---|
| 12 January 2017 (12.01.2017) | **26 January 2017 (26.01.2017)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> **WANG, Xia** <br><br> Telephone No.: (86-10) **62413245** |

Form PCT/ISA/210 (second sheet) (July 2009)

**INTERNATIONAL SEARCH REPORT**

Information on patent family members

| | International application No. |
|---|---|
| | **PCT/CN2016/081503** |

| Patent Documents referred in the Report | Publication Date | Patent Family | Publication Date |
|---|---|---|---|
| CN 102882894 A | 16 January 2013 | None | |
| CN 104796405 A | 22 July 2015 | None | |
| JP 2007060379 A | 08 March 2007 | None | |
| CN 105530243 A | 27 April 2016 | None | |
| US 2013042322 A1 | 14 February 2013 | KR 20130017333 A | 20 February 2013 |
| CN 102202064 A | 28 September 2011 | None | |

Form PCT/ISA/210 (patent family annex) (July 2009)